# EUROPEAN PATENT APPLICATION

(11) **EP 4 510 122 A1**
(43) Date of publication of application: **19.02.2025**
(21) Application number: 23191344.3
(22) Date of filing: 14.08.2023
(51) Int. Cl.: G09G 5/00, G06F 1/26

(54) **DATA COMMUNICATION CONNECTING DEVICE**

(71) Applicant: EET Group A/S, 2750 Ballerup (DK)
(72) Inventor: Krogh, Michael, 2750 Ballerup (DK); Huang, Steven, 2750 Ballerup (DK)
(74) Representative: Dragsted Partners A/S

(57) **Abstract**

A power and/or data communication connecting device for connecting a computing device with a graphical display device having a display input connection and a control input/output connection, the power and/or data communication connecting device comprising: a first electrical cable having a first end and a second end, a first data connector in electrical communication with the first end of the first electrical cable, the first data connector providing a first display input/output and a first data input/output, a second data connector in electrical communication with the second end of the first cable, the second data connector providing a second display input/output, a third data connector in electrical communication with the second end of the first cable providing a second data input/output, and a processing device in electrical communication with the first cable; the processing device is in electrical communication with the first data connector and in electrical communication with the second data connector and/or the third data connector, wherein the processing device is configured to receive a first electrical input signal from the first data connector, process the first electrical signal to direct a first part of the first electrical signal into a first output signal and a second part of the first electrical signal into a second output signal.

## Description

### Technical field

A power and/or data communication connecting device for connecting a computing device with a graphical display device having a display input connection and a control input/output connection.

### Description

Meeting rooms and classrooms often provide a device that may be utilized to present information to the meeting participants or the students attending a class. Most meeting rooms have a projector or a screen where information is presented directly from a computing device on the screen in a one-way direction, i.e. the information is transmitted from a computer and displayed on the display device. The display device may be a screen or a projector which is capable of displaying the content of the computer on the screen. Such a presentation device may use a display cable which works to digital or analogue standards, such as HDMI, DisplayPort, DVI or VGA.

However, in recent times it has been a desire to provide a display device that may also function as an input device to the computer which displays the information. Such screens may be found, e.g., in classrooms, where the display screen may be a touchscreen, or where the display device may be provided with an input device capable of registering input which is applied to the display device or a board, so that the display may be seen as being interactive, and the user may input data into the computer via the display device.

Such display devices have been on the market for quite some time, where the connection between the display device and the computer may be provided in the form of two cables, one cable being the display cable, and the second cable providing control input data from the display device to the computer, thereby allowing control input to be provided directly from the screen.

The touch input may be provided via an input device which is connected to the computer via an USB cable, while the display output may be provided from the computer via a separate display cable. Thus, the display cable may be connected to the display output of the computer, and the USB cable may be connected to a USB connector on the computer. However, in recent years a new connection standard for computers has been gaining popularity, where a computer, such as a laptop, may only be provided with one type of connector, which is a USB-C connector capable of providing both a display output and a control input/output. However, most of the display devices produced in previous years are not capable of handling USB-C connections, as the control output is in the form of a USB connector, and the display is in the form of a separate display connector. Thus, a common solution is to provide a USB-C hub which connects to the computer, with a USB and a display cable extending from the USB-C hub.

Furthermore, there is a length limit to a USB-C cable. Currently, it is not possible to provide USB-C cables that extend beyond approximately 3 metres, as the data may be lost along the USB-C cable, and the cable does not have the amplitude to provide display and/or control input beyond that length.

Thus, there is a need to provide a solution allowing modern-day computers having only a USB-C connection to be connected to an interactive display across long distances without compromising the quality of the display signals or the control signals.

According to the invention, there is provided a power and/or data communication connecting device for connecting a computing device with a graphical display device having a display input connection and a control input/output connection, the power and/or data communication connecting device comprising: a first electrical cable having a first end and a second end, a first data connector in electrical communication with the first end of the first electrical cable, the first data connector providing a first display input/output and a first data input/output, a second data connector in electrical communication with the second end of the first cable, the second data connector providing a second display input/output, a third data connector in electrical communication with the second end of the first cable providing a second data input/output, a processing device in electrical communication with the first cable, the processing device being in electrical communication with the first data connector and in electrical communication with the second data connector and/or the third data connector, wherein the processing device is configured to receive a first electrical input signal from the first data connector, process the first electrical input signal to direct a first part of the first electrical signal into a first electrical output signal and a second part of the first electrical signal into a second electrical output signal.

The power and/or data communication connecting device may be in the form of an electrical cable which has a first data connector that may be electrically connected to a computer, and where the first data connector is electrically connected to a processing device, where the processing device is in electrical connection with a second data connector and a third data connector. The second data connector and the third data connector may be two separate connectors that are in electrical connection with an interactive display device, where the second data connector may provide a first connection standard to the interactive display device, and the third data connector may provide a second connection standard to the interactive display device. However, the first data connector may be configured to receive two or more connection standards from a computing device.

Thus, the first electrical input signal may comprise two different signal types that are configured to be transmitted from the computing device, where the processing device is configured to separate the first electrical input signal into a first electrical output signal and a second electrical output signal, where the first electrical output signal may be part of the first electrical input signal and the second electrical output signal may be a different part of the first electrical input signal. Thus, the processing device may be capable of receiving an input signal having at least two different data communication standards and separating the at least two different data communication signals, and transmitting a signal having a first data communication standard to the second data connector in the form of a display data communication signal and to the third data connector in the form of a control data signal.

Thus, a computer that is connected to the power and/or data communication device may send and receive display data and control data via one data connector, while the power and/or data communication device may separate the display data to the second data connector and the control data to the third data connector.

As data communication standards may be configured to transmit and/or receive data using one data communication standard, it may be understood that data communication between a computing device and an interactive display may be two-way communication, where the computing device may be configured to transmit and receive signals from the first data connector to the second data connector as well as transmit and receive signals from the first data connector to the third data connector. The processing device may be configured to transmit and receive data to and from each data connector.

Within the understanding of the present disclosure, the processing device may be configured to transmit and receive electrical data signals from the first data connector, the second data connector and the third data connector, and to transmit the electrical data signals to the correct data connector. Thus, the processing device may be configured to receive control signals from the second data connector and transmit the control signals to the first data connector, allowing the computer to receive the control signals from the second data connector when the second data connector is connected to the interactive display.

In one exemplary embodiment of the present invention, the processing device is configured to transmit and receive two separate data streams from one electrical connection and to transmit and receive two separate data streams to and via two separate electrical connections, where each data stream is received and transmitted through one electrical connection. Thus, the power and data communication connecting device may be utilized to receive at least two different types of data from a computing device via one single connection and to transmit each data stream to its respective electrical connection.

In one exemplary embodiment, the processing device may be configured to receive a second electrical input signal from the third data connector and to transmit the second electrical input signal to the first data connector. This allows two-way data communication from the first data connector to the third data connector, where e.g. a computing device may communicate with an external device, such as an interactive display device.

In one exemplary embodiment, the second electrical input signal may be a second control input signal. The second electrical input signal may e.g. be a control input from an interactive display, where the control input is transmitted from the interactive display via the third data connector, and where the processing device receives the signal, processes the signal and sends the signal to the first data connector, which may be connected to a computing device. The transmission may further be in the reverse direction, where the computing device communicates control signals and/or feedback signals to the interactive display by transmitting data from the computing device via the first data connector, the processing device and the third data connector to the interactive display.

In one exemplary embodiment, the processing device may be embedded in the first electrical cable. The processing device may be provided with a housing that may be part of the electrical cable. Thus, the electrical connection between the processing device and the electrical cable may be permanent, and the electrical cable cannot be selectively attached and/or detached from the processing device.

In one exemplary embodiment, the processing device receives a first electrical power signal from the first data connector, the second data connector or the third data connector. This means that the processing device may be powered by electrical power that is provided by a computing device and/or a peripheral device such as an interactive display. The data communication socket of a computing device may have a power source that is in electrical communication with the processing device when the power and/or data communication connecting device is being utilized. Such a power source may e.g. be a 5-volt power source of a USB connector, where a USB cable may be provided with a positive pole and a ground pole, and where the voltage difference between the two poles may e.g. be 5 V. Thus, the processing device may be powered by a positive and a ground or a negative pole of a data connector of the computing device and/or peripheral device. Thus, the power and/or data communication connecting device may be an active device which is powered by an electrical power source of an external device which is connected to one of the data connectors of the device.

In one exemplary embodiment, the first electrical input signal may comprise a first display signal and a first control data signal. Thus, the power and/or data communication connecting device may be connected via one connector to the computing device, and the first data connector may be capable of providing both a first display signal and a first control data signal via one connector. The first display signal and the first control data signals may be separated from each other in data connection wires of the connecting device, where the signals may be electrically transmitted to the processing device. The processing device may receive both signals in a signal input port of the processing device, where the processing device may be configured to recognize each type of signal and transmit each type of signal to their respective second data connector and third data connector in order to separate the two types of signals and to ensure that the signals do not interfere with each other at an external device connected to a computing device via the connecting device.

In one exemplary embodiment, the first output signal may be a first electrical display signal, and the second output signal may be a first electrical control signal. The first electrical input signal may be provided from a computing device configured to provide a first display signal that is intended to be shown on an external display, and where the external display is configured to provide a control signal to the computing device.

In one exemplary embodiment, the first data connector may be a USB-C data connector, the second data connector may be an HDMI connector, or alternatively an alternative digital video connector, and/or the third data connector may be a USB-B connector or an alternative USB data connector. USB-C is currently one of the most used standards for data and video communication from a computing device, such as a laptop, where some laptops do not have any other types of digital data connectors, such as any MacBook that is available in 2023. Thus, some computing devices are not provided with a plurality of types of data connectors, which means that it may be difficult to get a USB connector that provides USB communication while another connector provides HDMI signals (or other types of digital video signals, such as DVI or DP). Some laptops may only be provided with one single USB-C connection, which means that if such computers are intended to be used to provide input for an interactive display, the computer has to be provided with a USB hub which separates the signals prior to connecting the external device to two separate data cables.

An interactive display device may be provided with a digital video signal connector for providing video communication with a computing device and a separate control input connector, e.g. in the form of a USB-B connection. By providing the power and/or data communication device with one USB-C connector at one end and with a USB-B connector and a HDMI connector at the other end, it may be possible to connect the computer directly to the interactive display by using only one USB-C connection to connect the computing device with the interactive display.

In one exemplary embodiment, the length of the electrical cable may be 5 metres, or more specifically at least 7.5 metres, or even more specifically at least 10 metres. Within the understanding of the present disclosure, the length of the cable may extend from the first data connector to the second and/or the third data connector.

In one exemplary embodiment, the electrical cable may comprise a first data communication wire for the first display input and a second data communication wire for the first control input/output, where the first data communication wire is shielded from the second data communication wire. Within the understanding of the present disclosure, the first and/or the second data communication wire may be a plurality of data communication wires that in conjunction provide a first display input and/or a second control input/output. Such a plurality of wires may e.g. be two or more wires that are electrically isolated from each other. However, the shielding of the wires may reduce any signal noise transmitted from the first data communication wire to the second communication wire and vice versa. A common problem when trying to use one cable to transmit more than one type of electrical signal is that the signals may interfere with each other and thereby distort the electrical signals that are transmitted through the wire. However, by shielding the two sets of data communication wires, the interference between one type of data communication and a second type of data communication may be reduced. It is well known that a HDMI signal may easily be distorted by electrical noise when travelling along an electrical wire.

In one exemplary embodiment, the first electrical cable may comprise a second electrical cable which connects the first data connector with the processing device, a third electrical cable which connects the second data connector with the processing device, and a fourth electrical cable which connects the third data connector with the processing device. This means that the first electrical cable may be in the form of three separate electrical cables, where each electrical cable extends from a data connector to the processing device. Thus, the electrical data communication may travel from a computing device via the second electrical cable to the processing device, and a separated signal may be transmitted from the processing device to an external device via a third electrical cable and a fourth electrical cable.

In one exemplary embodiment, the processing device may amplify the first electrical input signal, the second electrical input signal and/or the third electrical input signal, and may transmit an amplified electrical signal to a first data connector (third output), a second data connector (first output) and/or a third data connector (second output signal). Thus, as the electrical input signals are sent via an electrical cable from one connector to another connector, the electrical cable may have an electrical resistance, which means that the magnitude of the signal may drop along the length of the electrical cable. Thus, if the electrical cable is 10 metres in length, the amplitude of the input signal from a data connector may be reduced significantly along the length of the electrical cable, and the signal may be attenuated. In order to reduce data loss, the processing device may be configured to amplify the attenuated input signal in order to transmit the input signal onwards to a connected device and thereby ensure that the transmitted signal fulfils the requirements of the data communication standard. Thus, the data output signal that is sent from the processing device may be an amplified data communication signal, which allows data communication across longer lengths of electrical cables.

In one embodiment, the electrical cable may comprise a plurality of data communication wires, where each data communication wire may be attached to one connecting pin in the first data connector, the second data connector, the third data connector and/or the processing device. The plurality of data communication wires may be in the form of wire pairs or wire bundles that may be utilized to transmit data from one data connector to the processing device. The data communication wires may be provided in wire pairs or wire bundles where the data communication wires may be isolated from each other, while being shielded (magnetically) from other wire pairs or wire bundles. This may improve the data communication from one end of the electrical cable to the other end of the electrical cable.

In one embodiment, a first end of a data communication wire may be attached to one conductive pin in one of the data connectors, and an opposing second end of the data communication wire may be connected with a conductive pin of the processing device. Thus, each of the pins of a data connector may be electrically coupled to one pin of the processing device.

In one embodiment, the plurality of data communication wires comprise at least two data communication wires that are arranged in a data communication pair.

Within the context of the present application, the term "HDMI" may mean a device that implements an EIA/CEA-861 standard. Within the context of the present application, the term "USB" may mean a device that implements a USB 1, USB 2.0, USB 3.X or USB 4 standard. Within the context of the present disclosure, the term "DVI" may be a device that implements a video display interface developed by the DDWG.

### Brief description of the drawings

The following is an explanation of exemplary embodiments with reference to the drawings, in which:
Fig. 1 is a schematic illustration of a power and/or data communication connection device in accordance with the present disclosure,
Fig. 2 is a top view of an embodiment of a power and/or data communication connection device in accordance with the present disclosure,
Figs. 3A-3C are front views of data connectors of a power and/or data communication connection device in accordance with the present disclosure, and
Fig. 4 is a cross-sectional view of an electrical cable in accordance with the present disclosure.

### Detailed description

Various exemplary embodiments and details are described below, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

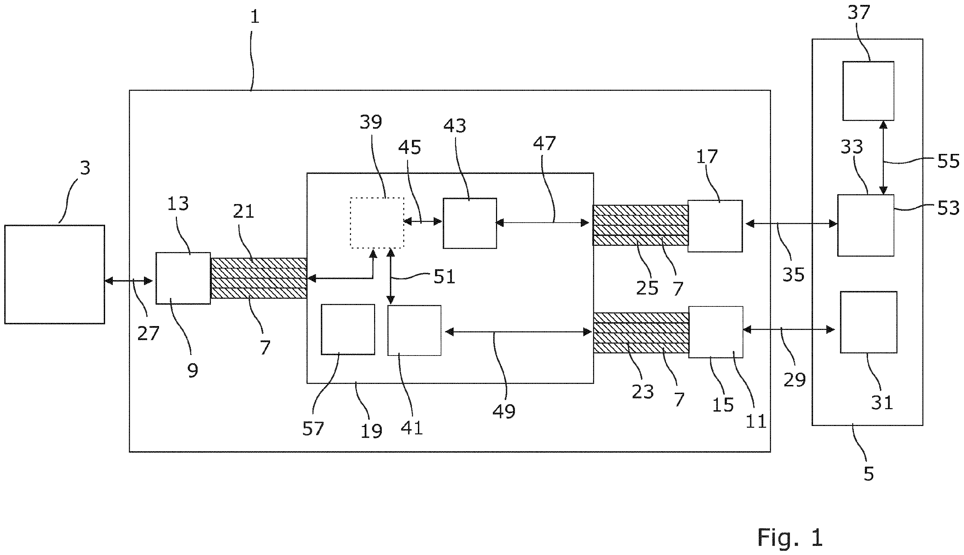

Fig. 1 is a schematic illustration of a power and/or data communication connection device 1, where the device 1 may be utilized to connect a computing device 3 with a graphical display device 5.

The power and/or data communication connection device 1 may comprise a first electrical cable 7 having a first end 9 and a second end 11, a first data connector 13, a second data connector 15 and a third data connector 17, where there is electrical communication between the first data connector 13 and the second data connector 15 and the third data connector 17. The device 1 further comprises a processing device 19 which is in electrical communication with the electrical cable 7.

The electrical cable 7 may comprise a second electrical cable 21 which connects the first data connector 13 with the processing device 19, a third electrical cable 23 which connects the second data connector 15 with the processing device 19, and a fourth electrical cable 25 which connects the third data connector 17 with the processing device 19. The electrical cables 21, 23, 25 provide electrical signal communication between the connectors 13, 15, 17 and the processing device 19.

The power and/or data communication connection device 1 is connected to the computing device 3, such as a laptop computer or a desktop computer, where the first data connector 13 may be connected to a data connector (not shown) of the computing device 3, where the first data connector 13 provides a first data input/output 27. The power and/or data communication connection device 1 is connected to the display device 5, such as a touchscreen and/or an interactive display, where the second data connector 15 may be connected to a display data connector 31 of the display device 5, where the second data connector 15 provides a second data input/output 29, and where the third data connector 17 may be connected to a control input connector 33 providing a third data input/output 35.

The first data input/output 27 may comprise a first display input/output and a first control data input/output, where the first display input/output and the first control data input/output are provided through the first data connector 13 and is transmitted via the second electrical cable 21 to the processing device 19. The first display input/output and the first control data input/output may be different types of data, where the first display data is in the form of a display signal to be transmitted to the display device 5, while the first control data input/output may be control data, which allows the computing device 3 to be controlled via a control interface 37 of the display device 5. The control interface 37 may be a touch surface on a screen or may be a motion sensor that registers movement on or in front of the screen and translates these data as control input to the computing device 3.

In this embodiment, the processing device 19 may comprise an optional amplifier 39 which receives the first data input/output from the first data connector 13 and may amplify the signal to an amplitude that corresponds to the specific communication standard of the data signal.

After amplification by the amplifier 39, a first display input/output signal 51 which is part of the first data input/output 27 is transmitted to a video controller 41 which may be a HDMI controller or another type of video controller which separates the first display input/output signal 51 from the first data input/output 27 and transmits/receives 49 the first display input/output signal 51 via the third electrical cable 23 to the second data connector 15. The first display input/output signal 51 is transmitted 49 to the display data connector 31 of the display device 5, allowing an image or a graphical representation of the operating system of the computing device 3.

Furthermore, after amplification by the optional amplifier 39 a first control input/output signal 45 which was part of the first data input/output 27 is transmitted 47 to a first data communication controller 43, such as an USB controller, and is transmitted 47 onwards via the fourth electrical cable 25 to the third data connector 17. The third data connector 17 is connected to the control input connector 33 of the display device 5, where the first control input/output signal 45 may be received by a second data communication controller 53, such as an USB controller. The control interface 37 of the display device 5 will provide a second control input/output 55 to the second data communication controller 53, allowing the control input of the display to be transmitted and received by the second data communication controller 53.

The first data input/output 27, the second data input/output 29 or the third data input/output 35 may comprise a power current, where the power current may be utilized to energize a power source 57 of the processing device 19, where the power source 57 may be utilized to provide a power supply to the amplifier 39, to the video controller 41 and/or to the first data communication controller 43.

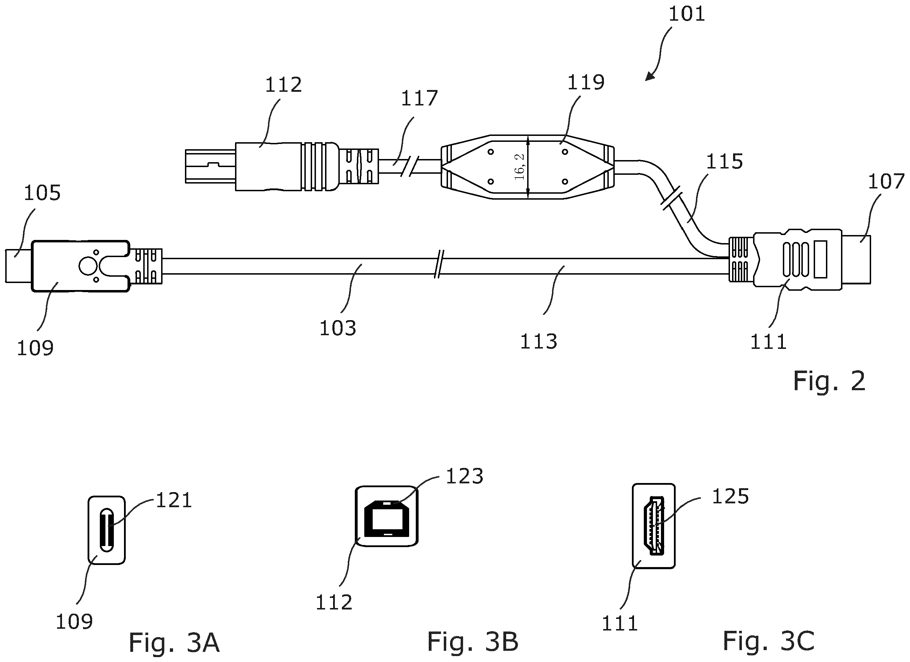

Fig. 2 shows a power and/or data communication connection device 101 according to the present disclosure, where the device 101 comprises a first electrical cable 103 having a first end 105 and a second end 107, where the first end 105 comprises a first data connector 109 and where the second end 107 comprises a second data connector 111 and may comprise a third data connector 112. The device 101 may comprise a processing device 119, where the first electrical cable 103 may comprise a second electrical cable 113, a third electrical cable 115 and a fourth electrical cable 117, and where the second electrical cable 113, the third electrical cable 115 and the fourth electrical cable 117 are in electrical connection with the processing device 119. The connections shown in Fig. 1 may be applied to the device seen in Fig. 2, where all three data connectors 109, 111, 112 are in electrical communication with the processing device 119, and the signals obtained by the data connectors 109, 111, 112 are transmitted/received by the processing device 119, and transmitted to its respective connector from the processing device 119.

The cable length from the first end 105 to the second end 107 may be at least 5 metres or more specifically around 7.5 metres, or even more specifically around 10 metres.

The connectors 109, 111, 112 may be molded in a thermoplastic material, and the cables 103, 113, 115, 117 may be coated or molded in a thermoplastic material, providing electrical insulation between the inside of the cable and the outside of the cable. The third electric cable 115 may comprise electrical connections that extend to the first data connector 109 and/or the second data connector 111, and the electrical connection diagram of the cables may be similar to that shown in Fig. 1

A front view of the first data connector 109 may be seen in Fig. 3A, where the first data connector 109 is a USB-C data connector having all connecting pins 121 in accordance with the USB-C standard. A front view of the third data connector 112 may be seen in Fig. 3B, which in this example is a USB-B connector, having all the connecting pins 123 in accordance with the USB-B standard. A front view of the second data connector 111 may be seen in Fig. 3C, which in this example is a HDMI connector, having all connecting pins 125 in accordance with the HDMI standard.

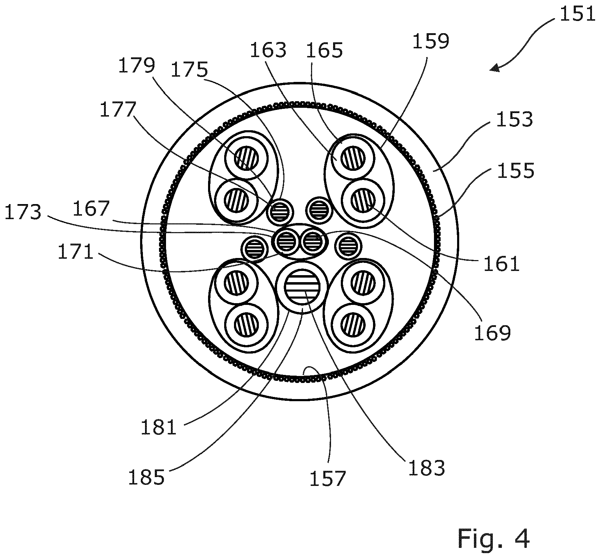

Fig. 4 is a cross-sectional view of an electrical cable 151 that may be utilized for the power and/or data communication device in accordance with the present disclosure. The electrical cable 151 may have an outer jacket 153 that is in a radial, outwards direction relative to the outermost part of the electrical cable 151. In order from the outside and in, the electrical cable 151 comprises a braiding 155 facing the inner surface of the outer jacket 153, and where a shielding 157 is provided facing the inner side of the braiding 155.

Within the shielding 157 of the electrical cable 151, four pairs of signal wires 159 are provided, where each signal wire 159 comprises a pair of conductors 161 having jackets 163 and a shielding 165 around each pair.

A fifth pair of signal wires 167 is provided around the centre of the electrical cable 151, where the signal wire 167 comprises a pair of conductors 169 having jackets 171 and a shielding 173 around the fifth pair of conductors 169.

The electrical cable 151 further comprises four single signal wires 175 having a conductor 177 and a jacket 179 surrounding each conductor.

The electrical cable 151 also comprises a drain wire 181 having a conductor 183 and a jacket 185.

The jackets 163, 171, 179 and 185 of the cable 151 are intended to electrically insulate the conductors from each other, while the shielding 157, 165, 169, 173 is used to magnetically shield the conductors within the shielding from other conductors around the shielding.

The use of the terms "first", "second", "third" and "fourth", "primary", "secondary", "tertiary", etc., does not imply any particular order, but are included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is also to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications and equivalents.

### List of references

- 1: Power and/or data communication connection device
- 3: Computing device
- 5: Display device
- 7: First electrical cable
- 9: First end of electrical cable
- 11: Second end of electrical cable
- 13: First data connector
- 15: Second data connector
- 17: Third data connector
- 19: Processing device
- 21: Second electrical cable
- 23: Third electrical cable
- 25: Fourth electrical cable
- 27: First data input/output
- 29: Second data input/output
- 31: Display data connector
- 33: Control input/output connector
- 35: Third data input output
- 37: Control interface
- 39: Amplifier
- 41: Video controller
- 43: First data communication controller
- 45: First control input/output signal
- 47: Transmission of first control input/output signal
- 49: Transmission of first display input/output signal
- 51: First display input/output signal
- 53: Second data communication controller
- 55: Second control input/output 55
- 57: Power source
- 101: Power and/or data communication connection device
- 103: First electrical cable
- 105: First end of first electrical cable
- 107: Second end of first electrical cable
- 109: First data connector
- 111: Second data connector
- 112: Third data connector
- 113: Second electrical cable
- 115: Third electrical cable
- 117: Fourth electrical cable
- 119: Processing device
- 121: Connecting pins USB-C
- 123: Connecting pins USB-B
- 125: Connecting pins HDMI
- 151: Electrical cable
- 153: Outer jacket
- 155: Braiding
- 157: Shielding
- 159: Signal wire pairs
- 161: Conductor
- 163: Jacket
- 165: Shielding
- 167: Signal wire pair
- 169: Conductor
- 171: Jacket
- 173: Shielding
- 175: Single signal wire
- 177: Conductor
- 179: Jacket
- 181: Drain Wire
- 183: Conductor
- 185: Jacket

## Claims

1. A power and/or data communication connecting device for connecting a computing device with a graphical display device having a display input connection and a control input/output connection, the power and/or data communication connecting device comprising:
- a first electrical cable having a first end and a second end,
- a first data connector in electrical communication with the first end of the first electrical cable, the first data connector providing a first display input/output and a first data input/output,
- a second data connector in electrical communication with the second end of the first cable, the second data connector providing a second display input/output,
- a third data connector in electrical communication with the second end of the first cable providing a second data input/output, and
- a processing device in electrical communication with the first cable; the processing device is in electrical communication with the first data connector and in electrical communication with the second data connector and/or the third data connector, wherein the processing device is configured to receive a first electrical input signal from the first data connector, process the first electrical signal to direct a first part of the first electrical signal into a first output signal and a second part of the first electrical signal into a second output signal.

2. A power and/or data communication connecting device in accordance with claim 1, wherein the processing device is configured to receive a second electrical input signal from the third data connector and to transmit the second electrical input signal to the first data connector.

3. A power and/or data communication connecting device in accordance with claim 1, wherein the second electrical input signal is a second control input signal.

4. A power and/or data communication connecting device in accordance with claim 1, wherein the processing device is embedded in the first electrical cable.

5. A power and/or data communication connecting device in accordance with claim 1, wherein the processing device receives electrical power from the first data connector, the second data connector or the third data connector.

6. A power and/or data communication connecting device in accordance with claim 1, wherein the first electrical input signal comprises a first display signal and a first control data signal.

7. A power and/or data communication connecting device in accordance with claim 1, wherein the first output signal is a first electrical display signal, and the second output signal is a first electrical control signal.

8. A power and/or data communication connecting device in accordance with claim 1, wherein the first data connector is a USB-C data connector, the second data connector is an HDMI connector and/or the third data connector is a USB-B connector.

9. A power and/or data communication connecting device in accordance with claim 1, wherein the length of the electrical cable is 5 metres, or more specifically at least 7.5 metres, or even more specifically at least 10 metres.

10. A power and/or data communication connecting device in accordance with claim 1, wherein the electrical cable comprises a first data communication wire for the first display input and a second data communication wire for the first control input/output, where the first data communication wire is shielded from the second data communication wire.

11. A power and/or data communication connecting device in accordance with claim 1, wherein the first electrical cable comprises a second electrical cable which connects the first data connector with the processing device, a third electrical cable which connects the second data connector with the processing device, and a fourth electrical cable which connects the third data connector with the processing device.

12. A power and/or data communication connecting device in accordance with claim 1, wherein the processing device amplifies the first electrical input signal, the second electrical input signal and/or the third electrical input signal, and transmits an amplified electrical signal to a first data connector, a second data connector and/or a third data connector.

13. A power and/or data communication connecting device in accordance with claim 1, wherein the electrical cable comprises a plurality of data communication wires, where each data communication wire may be attached to one connecting pin in the first data connector, the second data connector, the third data connector and/or the processing device.

14. A power and/or data communication connecting device in accordance with claim 12, wherein a first end of a data communication wire is attached to one conductive pin in one of the data connectors, and where an opposing second end of the data communication wire is connected with a conductive pin of the processing device.

15. A power and/or data communication connecting device in accordance with claim 1, wherein the plurality of data communication wires comprise at least two data communication wires that are arranged in a data communication pair.
